# EUROPEAN PATENT SPECIFICATION

(11) **EP 0 773 505 B1**
(45) Date of publication and mention of the grant of the patent: **07.08.2002**
(21) Application number: 96117952.0
(22) Date of filing: 08.11.1996
(51) Int. Cl.: G06K 1/12

(54) **Laser marking system and method**
Laser-Markierungssystem und -verfahren
Système et procédé de marquage à lasers

(30) Priority: 10.11.1995 JP 29306495; 08.02.1996 JP 2281496
(43) Date of publication of application: 14.05.1997
(73) Proprietor: KABUSHIKI KAISHA TOSHIBA, Kawasaki-shi, Kanagawa-ken 210-8572 (JP)
(72) Inventor: Okazaki, Koki, Kouhoku-ku, Yokohama-shi, Kanagawa-ken (JP); Sano, Yuji, Yokosuka-shi, Kanagawa-ken (JP); Aoki, Nobutada, Chigasaki-Shi, Kanagawa-Ken (JP); Akiyama, Hidetoshi, Kanazawa-Ku, Yokohama-shi, Kanagawa-ken (JP); Yamada, Toshitaka, Ohta-Ku, Tokyo (JP); Hagiwara, Toshio, Tama-ku, Kawasaki-shi, Kanagawa-ken (JP); Kodaira, Osamu, Fuchu-Shi, Tokyo (JP)
(74) Representative: Blumbach, Kramer & Partner GbR

(56) References cited:
- EP-A- 0 655 700
- EP-A- 0 681 252
- US-A- 4 822 987
- US-A- 5 202 199

## Description

### BACKGROUND OF THE INVENTION

The present invention relates to identification of a object member using a mark being put thereon. More particularly, the invention relates to method and system for placing the mark being suited for use In the identification of the object such as components of a reactor on the object, and for reading the mark placed thereon.

In light water reactors broadly divided into a pressurized water reactor and bolling water reactor (BWR), a large number of diverse components made of a material that Is sufficiently corrosion-resistive and strong against a high temperature under a high-temperature and high-pressure environment, for example, austenite stainless steel, a nickel radical alloy, or a zirconium alloy are preferably employed. These components of the reactor must be reliably identified at the time of manufacturing or assembling or at the time of inspection, repair, exchange of a reactor after the operation of a nuclear power plant Is started, or the like.

In this case, the easiest Identification technique Is a method based on shape recognition in which the outline of components that is an object is discerned directly or monitored remotely using an imaging apparatus. However, according to this method, numerous components within the reactor of which outlines are analogous to one another or some components Installed in hardly-discernible places within the reactor may not be able to be identified reliably.

Then, in this identification, a technique for placing a mark on the object and for reading the mark placed thereon has been adopted. In particular, In recent years, a marking technique using a laser beam has been discussed in terms of marking precision and efficiency under the foregoing situation. This laser marking technique Is thought to be effective in remotely and automatically identifying objects hardly accessible by a human being.

For instance, proposed as the laser marking technique Includes; (1) a method in which continuous-wave (CW) laser light is Irradiated to the surface of the component member of the reactor within a gas so that the material surface is heated and melted and thus processed convexly (raised); (2) a method in which CW laser light is irradiated to the marking object side so that the material surface is melted, chemically reacted with oxygen contained in an atmospheric gas, and thus discolored; and (3) a method in which the material surface is melted and evaporated, and thus processed concavely (removed).

However, according to the method (1), since an amount of input heat stemming from laser energy to be irradiated to the material surface must be large, a marking part to which laser light is irradiated is susceptible to heat. As a result, presumably, the corrosion resistance of the marking part of the material surface deteriorates because of a change in residual stress on the surface (tensile stress that remains due to localized quick heating or cooling), a change in composition or grain boundary, a change in gas content (nitriding or hydrogenation due to chemical reaction with an atmospheric gas), or the like.

According to the method (2), for satisfactory discoloring (blackening), a large amount of input heat stemming from laser energy must be fed to the material surface in order to form a thick oxidative layer whose thickness exceeds 1 micrometer. The marking part to which lager light is Irradiated Is therefore susceptible to heat. For the same reason as the foregoing one, the corrosion resistance of the marking part of the material surface predictably deteriorates.

In this case, since there is a fear that the material strength of the oxidative layer might have deteriorated, small cracks may occur in the oxidative layer because of synergism with the foregoing heat susceptibility. This leads to the concern about significant deterioration of corrosion resistance. Furthermore, the oxidative layer is generally inferior In heat conductivity to the other part of the object member. The thick oxidative layer cuts off the heat conduction from the subsurface layer of the object member to the inside thereof, whereby a difference In temperature between the subsurface layer and Inside Increases. As a result, a distortion occurs due to a difference In volume expansion, and small cracks are created. Consequently, there arises a fear that the deterioration of corrosion resistance may become more significant.

According to the method (3), since a large amount of heat to be Input to the material surface is required, the marking part to which laser light Is Irradiated is susceptible to heat. For the same reason as the foregoing one, predictably, the corrosion resistance of the marking part may deteriorate. In this case, predictably, the corrosion resistance may deteriorate because the composition of the surface changes due to selective evaporation attributable to a difference in boiling point of each component elements of an alloy material. Moreover, since the marking part Is partly removed, an edged part is created on the material surface. The edged part is charged more readily than the other parts. It is therefore predicted that the corrosion resistance of the marking part may deteriorate more greatly due to facilitated electrochemical reaction.

In the aforesaid laser marking methods, therefore, the amount of heat stemming from laser energy to be input to an object member is large, and the marking part of the object member Is actively heated and fused to a considerable extent. The deterioration In material quality of the marking part Is so great that the corrosion resistance thereof predictably deteriorates markedly. This becomes significant in the case of a component member of a reactor. That Is to say, the component member Is exposed to a quite severe corrosive environment, In which the temperature and pressure are high and neutrons are irradiated, during operation of a nuclear power plant. There is therefore a fear that the marking part of a component member may corrode locally markedly during the operation of the plant and this may invite a decrease in mechanical and physical strength.

By the way, for reliably identifying the components of the reactor on a final basis, needless to say, not only improvement in laser marking technique but also a technique for efficiently reading the mark placed on the object efficiently, for instance, remotely and highly precisely.

US 5 202 199 discloses a method and a system according to the preambles of claims 1 and 10, respectively, wherein the laser marks are concave, shallow recesses with a depth in a range of 1-15 µm.

EP 0 681 252 A1 discloses a method of placing a code mark on a metallic object by laser irradiation, wherein the code mark is in the form of recesses and projections which are different in magnitude from the roughness of the object surface at that location, and a method and a system for reading such a code mark.

Accordingly, the object of the present invention is to provide a novel technique associated with laser marking for providing the object member such as a components of a reactor with an improved mark suitable for suppressing the deterioration in material quality of the object member.

The specific object of the present invention is to provide a novel technique for laser marking capable of relatively readily carrying out marking , which suppresses the deterioration in material quality of the object member and proves excellent in corrosion resistance.

The above object is achieved by a laser marking method according to claim 1 and a system according to claim 10, respectively.

According to the method, less energy than laser energy required to create a convex, concave part, or discolored part as the mark using the laser beam according to the prior art is needed to change surface roughness. Marking that suppresses deterioration in material quantity of an object member and proves excellent in corrosion resistance can be carried out relatively readily.

Further developments of the invention are given in the dependent claims.

The accompanying drawing which are incorporated in and constitute a part of this specification, illustrate embodiments of the present invention and, together with the description, serve to explain the principles of the present invention; in which:
FIG. 1A is an overall configuration diagram conceptually showing the first embodiment of the present invention;
FIG. 1B is a flowchart representing performance of the control element incorporated In the laser actuation controller shown In FIG. 1A;
FIGS. 2A to 2C are schematic sectional views showing states of an object member whose surface roughness changes;
FIG. 3 is an overall configuration diagram conceptually showing the second embodiment of the present invention;
FIG. 4 Is an overall configuration diagram conceptually showing the third embodiment of the present invention;
FIGS. 5A to 5C are schematic sectional views showing a change of the states of the mechanically-ground surface of an object member;
FIG. 6 is an overall configuration diagram showing the fourth embodiment of the present invention;
FIG. 7 is a diagram for explaining the relationship between light diffusibility and the directional characteristic of luminance;
FIGS. 8A and 8B are diagrams for explaining the relationship between light diffusibility and surface roughness;
FIG. 9 shows a model for explaining a range of emission directions of the light beam;
FIG. 10 shows a model for explaining a range of receiving directions selected from diffusion reflection directions of the emitted light beam reflected at the surface;
FIG. 11 is an overall configuration diagram showing the fifth embodiment of the present invention;
FIG. 12 is an overall configuration diagram showing the sixth embodiment of the present invention; and
FIG. 13 is a signal waveform chart showing the results of a measurement performed during a mark reading test conducted in the course of an example of an experiment which appear on an oscilloscope.

### DESCRIPTION OF THE PREFERRED EMBODIMENTS

Preferred embodiments of the present Invention will be described with reference to the drawings below.

### FIRST EMBODIMENT

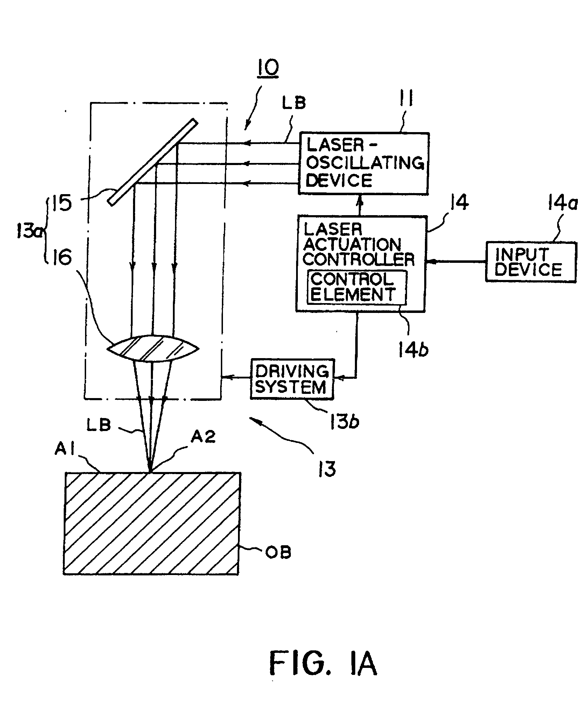

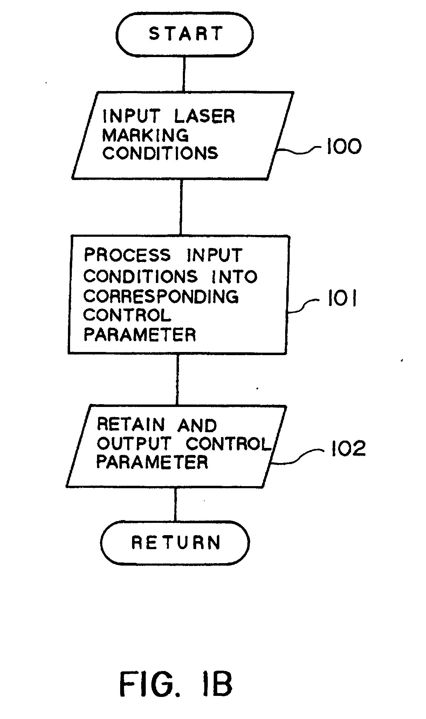

To begin with, the first to third embodiments will be described as preferred embodiments of a laser marking method and system of the present Invention In conjunction with FIGS. 1 to 5. Substantially Identical or equivalent components in FIGS. 1 to 5 will be assigned the same or similar reference numerals. The description of the components will be simplified or omitted. FIG. 1A is a conceptual diagram schematically showing the first embodiment of the present invention.

A laser marking system 10 shown in FIG. 1A is a system for placing a mark such as characters, a graphic, a symbol, numerals, a bar code, or the like on a object member OB such as a structural member made of a metallic material including various alloy materials (for example, austenite stainless steel, nickel radical alloys, and zirconium alloys) or a ceramic material by a laser beam LB. Herein, the object member OB includes a structural member, for example, a component member of a reactor such as a fuel clad (for example, a BWR fuel clad made of zircalloy-2) that is used under a high-temperature and high-pressure environment and requested to be highly corrosion-resistive and to be strong against a high-temperature.

The laser marking system 10 comprises a laser-oscillating device 11 for oscillating a laser beam LB, a laser scanning optical system 13 that Is a guiding and scanning means of the present Invention, and a laser actuation controller 14 ,which is a presetting means of the present invention, is connected to each of the laser-oscillating device 11 and the laser scanning optical system 13. The controller 14 Is also connected to a Input device 14a such as a keyboard, a mouse, or the like allowing an operator to input laser marking conditions to be preset.

The laser-oscillating device 11 is, preferably, formed with a device providing a pulse laser beam with a relatively large wavelength within a visible or infrared spectrum, for example, a neodymium (Nd)-YAG pulsed laser-oscillating device (for example, a laser constructed by combining a continuous oscillation type YAG laser with an acousto-optical Q switch, and designed to oscillate pulsed laser beam at a high pulse-repetition frequency), a CO₂ laser-oscillating device, a semiconductor laser-oscillating device, or the like.

The device 11 oscillates the laser beam LB according to a preset condition associated with laser marking such as a laser-oscillation wavelength, repetition frequency, laser output, laser energy per unit area, or the like controlled by the laser actuation controller 14.

The laser scanning optical system 13 comprises an optical system 13a for guiding the laser beam LB received from the laser-oscillating device 11 onto a surface A1 of the object member OB and a driving system 13b for scanning the laser beam LB on the surface A1. The optical system 13a includes a reflecting mirror 15 such as a galvano-mirror located at a position at which the laser beam LB emanating from the device 11 is received, and a condenser lens 16 such as a F- θ lens. The driving system 13b includes a drive source (for example, If a galvano-mirror is used as the reflecting mirror 15, a galvano-motor united with the galvano-mirror) for driving the optical system 13a via a power conveying mechanism.

The optical system 13a Is driven by the driving system 13b according to the preset condition such as a diameter of an irradiated spot, a scanning speed of the laser beam LB, or the like controlled by the laser actuation controller 14.

The laser actuation controller 14 Includes a control element 14b such as central processing unit (CPU) for presetting the condition associated with laser marking conditions input by operator via the input device 14b, and for controlling the operation of the laser-oscillating device 11 and the laser scanning optical system 13 based on the preset condition.

The conditions to be preset by the control element 14b are predetermined based on not only a targeted melting thickness of a subsurface layer to be formed in the surface A1 of the object member OB, but also differences in surface roughness produced between a laser-irradiated surface A2, which is a laser-scanned surface portion of the present Invention and a remaining non laser-scanned surface portion A1 of the object member.

In other words, the conditions Including a laser-oscillation wavelength, repetition frequency, laser output, laser energy per unit area, scanning speed or the like are preset before the scanning of the laser beam LB so as to provide the targeted melting thickness and the produced differences In surface roughness of the object member OB. Therefore, the conditions Is dependent on material properties of the object member OB, for Instance, a kind and surface-state thereof.

Referring to the flowchart in FIG. 1B, the operation of the control element 14b will be explained. When the control element 14b is initiated, in the first Step 100 of FIG. 1B, the element 14b try to Input the above-described laser marking conditions by a operator via the Input device 14a. In Step 101, the element 14b process the conditions Input Into a corresponding control parameter,for instance, by using a memory table look-up manner. Then, In Step 102, the control element 14b retain the control parameter in the memory table or the like and output the parameter as a control signal to the laser-oscillating device 11 and laser scanning optical system 13.

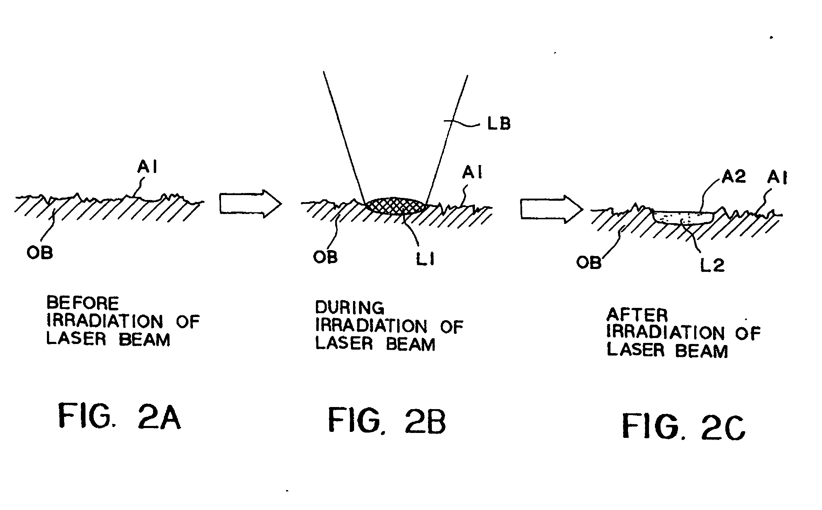

Herein, the principles of laser marking to be carried out by the laser marking system 10 will be described in conjunction with Figs. 2A to 2C. Figs. 2A to 2C are sectional views showing models used to explain states of the changing surface of the object member OB according to the experimental facts.

FIG. 2A explains the state of the surface of the object member OB attained before the laser beam LB is irradiated. As for the object member OB, a member whose surface A1 is, as illustrated, moderately rough is assumed.

FIG. 2B explains the state of the surface of the object member OB attained during irradiation of the laser beam LB. A melted layer L1 is formed in a laser-irradiated surface A2 of the object OB. The laser beam LB that Is a heat source for the melted layer L1 is irradiated and scanned under the laser marking conditions enabling the subsurface layer to be formed In the surface A1 of the object OB to be melted and re-coagulated by the above-described targeted melting thickness, or preferably, a thickness of 1 micrometer or less.

When, for instance, a zirconium alloy Is made Into the object member OB, the laser marking conditions are preferably preset based on not only the targeted melting thickness of 1 micrometer or less, but also the targeted depth of a metallurgically microscopic tissue produced In the subsurface layer due to the heat susceptibility of the object member OB. In particular, In this case, for maintaining excellent in corrosion resistance of the object member OB, the targeted depth of the metallurgically microscopic tissue Is preferably 30 micrometers or less. This condition is concerned with the zirconium alloy. The same applies to the above-mentioned another metallic material.

When, the aforesaid pulsed laser is used as the laser-oscillating device 11, since the wavelength of oscillating laser beam Is relatively large or 400 nanometers or more, the photon energy is small. A phenomenon such as abrasion hardly takes place. Moreover, since the laser beam is a pulsed wave beam, an amount of heat to be Input to an object member OB can be suppressed. For these reasons, the laser-oscillating device 11 can achieve heat processing that hardly affects thermally the object OB but melts a strictly subsurface layer alone.

FIG. 2C explains the state of the surface of the object member OB attained after the laser beam LB is Irradiated. On the laser-irradiated surface A2 of the object OB, the re-coagulated layer L2 is formed due to re-coagulation of the melted layer L1. The surface of the re-coagulated layer L2, that Is, the laser-Irradiated surface A2 Is different in surface roughness from the surface A1 of the object member OB before the laser beam Is irradiated. Compared with the surrounding non laser-irradiated surface A1, the laser-irradiated surface A2 Is less Irregular and relatively smoother. When checked visually, the laser-irradiated surface A1 looks glossy.

In this embodiment, based on the foregoing experimental facts, the mark that is patterned to be distinguishable due to a difference In surface roughness between the Irradiated surface A1, which is the surface of the object member after the laser beam is irradiated, and the surrounding non laser-irradiated surface A2 is used for Identifying the object member OB.

Next, the operations of the whole of this embodiment will be described.

First, when the laser marking system 10 Is activated, the laser-oscillating device 11 and laser scanning optical system 13 are actuated under the control of the laser actuation controller 14. The laser beam LB whose output has been adjusted as mentioned above is oscillated by the device 11. The laser beam LB has an optical path thereof angled toward the object member OB by the reflecting mirror 15. After converged by the condenser lens 16, the irradiated spot of the laser beam LB Is scanned on the surface A1 of the object member OB according to a pattern corresponding to the mark. The conditions for scanning the laser beam LB are properly modified by the driving system 13a that Is actuated in response to a control signal sent from the laser actuation controller 14.

As a result, a strictly subsurface layer under the laser-Irradiated surface A2 of the object member OB is heated to be a temperature equal to or higher than a melting point and then melted. The melted layer L1 Is cooled, whereby the re-coagulated layer L2 is produced. The surface of the re-coagulated layer L2, that is, the laser-irradiated surface A2 provides the mark In which surface roughness is changed to produce a surface smoother than the surrounding non laser-irradiated surface A1.

According to this embodiment, an amount of heat to be input to an object member is suppressed so that a strictly subsurface layer alone under a layer-irradiated surface is heated and fused. Laser energy required for marking can therefore be reduced drastically, whereby the heat susceptibility of the marking part can be alleviated greatly. Consequently, a laser marking method and system capable of limiting the material deterioration of the object member and offering excellent corrosion resistance can be provided.

In this embodiment, a pulsed laser-oscillating device Is used as a laser-oscillating device. As long as there is no departure from the principles of the present invention, the present invention is not limited to the pulsed laser-oscillating device but may apply to, for example, a device providing a continuous-wave (CW) laser beam.

### SECOND EMBODIMENT

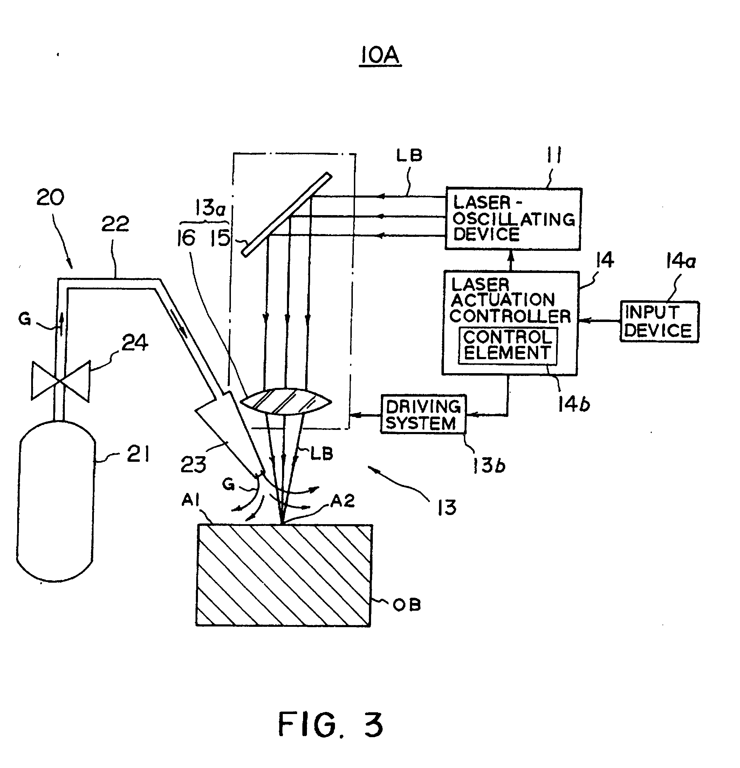

FIG. 3 is a conceptual diagram showing the second embodiment of the present invention.

In general, when the laser beam LB is irradiated to the object member OB, the material made into the object member OB and the medium covering the surface of the object member 12 chemically react with each other. A new compound is thought to be produced in the subsurface layer of the object member OB. For example, when the medium is a gas containing oxygen, an oxide is thought to be produced.

The compound may be less corrosion-resistive or have lower mechanical or physical strength depending on the kind of compound. For example, rapid heating or cooling at the time of laser-beam irradiation or heating due to chemical reaction may cause a compound to locally expand or contract in volume. In due course, small cracks may occur In the compound. Consequently, the corrosion resistance of the object member may deteriorate markedly. Moreover, chemical reaction may cause the volume of the material of the object member to increase for the structural reason. A distortion in volume may cause small cracks to occur around a compound. Consequently, the corrosion resistance of the object member may deteriorate markedly. Furthermore, when an oxide film is formed as a compound, since the oxide film suffers from low heat conductivity, heat conduction from the subsurface layer of the object member to the inside thereof may be cut off. Moreover, a difference in temperature between the subsurface layer and inside increases. A distortion occurs due to a difference in volume expansion. Small cracks occur. Consequently, the corrosion resistance of the object member may deteriorate markedly.

A laser marking system 10A shown in FIG. 3 has a gas feeder 20 for suppressing production of a compound In addition to the aforesaid components. The gas feeder 20 sprays an inert gas G, which Is a medium passing the laser beam LB, on the surface of the object member OB. The other components are Identical to the aforesaid ones and therefore assigned the same reference numerals. The description of the components will be omitted.

The gas feeder 20 includes a gas feed source 21 such as a gas bomb in which an inert gas G is preserved, an aeration tube 22 extending from the gas feed source 21, a spray nozzle 23 formed at the distal end of the aeration tube 22, and a valve 24 located in the middle of the aeration tube 22. The gas feed source 21 is filled with an Inert gas G composed of at least one of He, Ne, Ar, Kr, Xe, and Rn gases.

In the laser marking system 10A Including the gas feeder 20, the laser beam LB emanating from the laser-oscillating device 11 and being angled by the laser scanning optical system 13 Is scanned over the surface a of the object member OB under the control of the laser actuation controller 14. At the same time of scanning the laser beam, the inert gas Gfed from the gas feed source 21 is sprayed to cover at least the laser-irradiated surface A2 of the object member OB through the spray nozzle 23 via the aeration tube 22 at a given gas flow rate.

According to this embodiment, the whole of the surface of an object member or at least the laser-irradiated surface thereof is covered with an Inert gas. A laser beam is scanned under the gaseous atmosphere. In addition to the aforesaid advantage, there is an advantage that production of a compound on the laser-irradiated surface can be avoided owing to the property of the inert gas, and deterioration of corrosion resistance or strength attributable to the compound can be suppressed greatly. Occurrence of microscopic cracks deriving from deterioration of strength or an increase in volume, which is caused by chemical reaction, can be prevented effectively. Consequently, deterioration of corrosion resistance can be suppressed.

Assuming that an inert gas is fetched in solution into an object member during laser marking, the inert gas hardly reacts chemically and will therefore hardly affect the corrosion resistance of an object member. Moreover, there is the advantage of a secondary effect that the heat susceptibility of the object member is further alleviated owing to the cooling effect of the inert gas fluid.

### THIRD EMBODIMENT

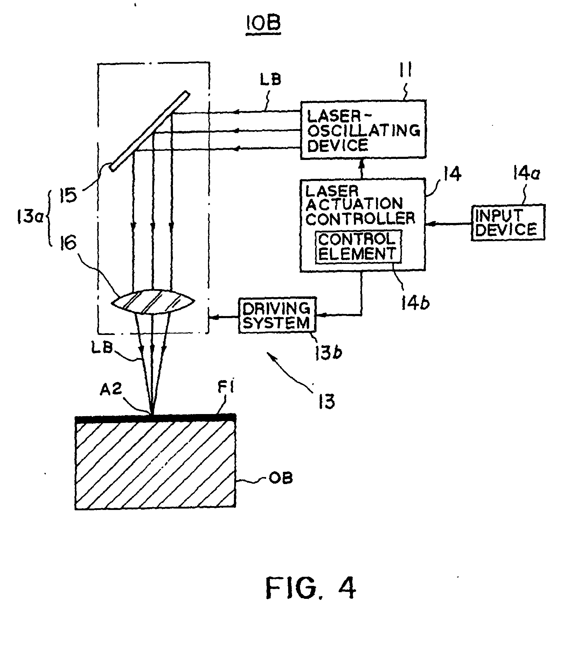

FIG. 4 is a conceptual diagram schematically showing the third embodiment of the present invention. In this embodiment, a member which is used under a high-temperature and high-pressure environment, and requested to be highly corrosion-resistive and strong against a high temperature, and of which surface is finished In advance by mechanical grinding is used as the object member OB. The components of the laser marking system are identical to those In the first embodiment and therefore be assigned the same reference numerals. The description of the components will be omitted.

In a laser marking system 10B shown in FIG. 4, the laser beam LB emanating from the laser-oscillating device 11 that is a pulsed laser or the like is scanned over the mechanically-ground surface F1 of the object member OB by the laser scanning optical system 13 under the control of the laser actuation controller 14.

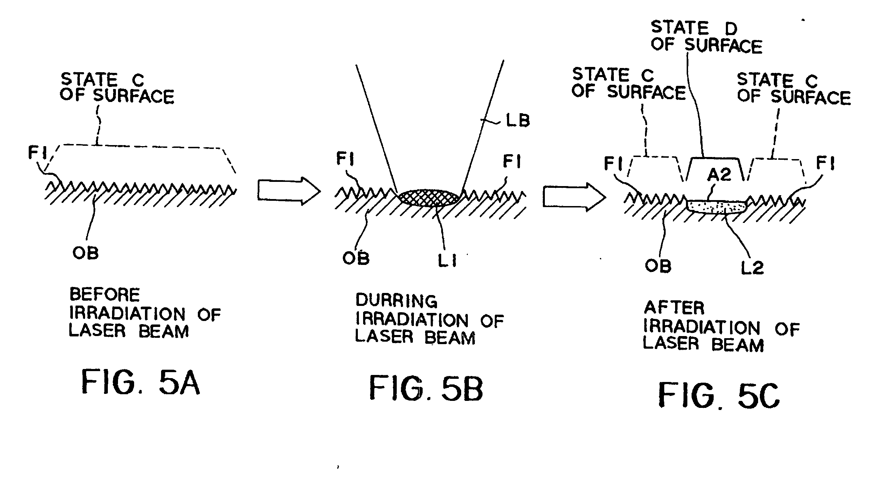

The states of the changing surface of the object member OB will be described. FIG. 5A shows a state C of the mechanically-ground surface F1 having uniform surface roughness which is attained before the laser beam is irradiated. FIG. 5B shows a melted layer L1 having a thickness t of 1 micrometer or less and being formed during Irradiation of the laser beam. FIG. 5C shows a re-coagulated layer L2 formed after the melted layer L1 Is cooled. The surface in the state D, or the re-coagulated surface L2, that is, the laser-irradiated surface A2 is little irregular but smooth as mentioned previously. Compared with the surrounding non laser-irradiated surface, that is, the mechanically-ground surface F1 in the state C, the laser-irradiated surface A2 In the state Dis higher in smoothness defined by the surface roughness.

This embodiment not only has the same advantage as the aforesaid embodiment but also has an advantage that a distinguishable marking can be performed even on a mechanically-ground surface having uniform surface roughness by differentiating surface roughness.

### FOURTH EMBODIMENT

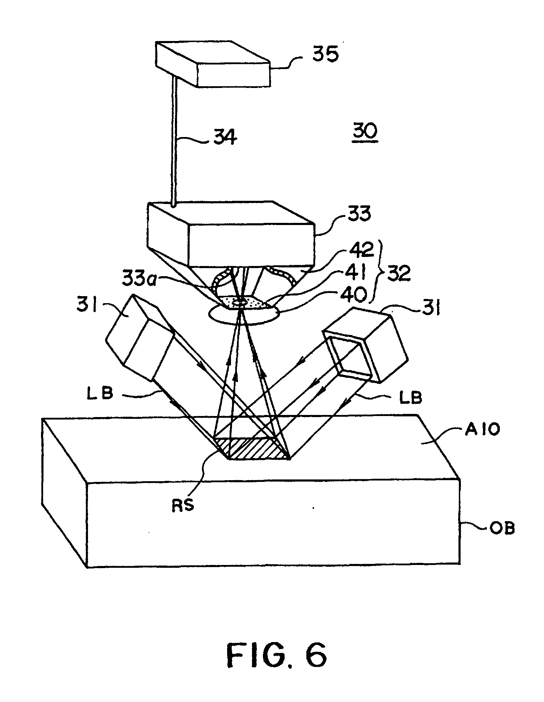

Next, the fourth to sixth embodiments will be described as preferred embodiments of a mark reading method and system of the present Invention In conjunction with FIGS. 6 to 12. In FIGS. 6 to 12, components that are substantially identical or equivalent to one another will be assigned the same or similar reference numerals. The description of the components will be simplified or omitted.

FIG. 6 is an overall configuration diagram of the fourth embodiment of the present invention.

A mark reading system 30 shown in FIG. 6 is a system for reading and recognizing the mark, which Is patterned and put on the surface of a metallic object member OB that is located at a position hardly accessible by a human being, such as, a component member of a radioactivated reactor by differentiating surface roughness using, for example, the aforesaid laser marking system, at a distance or remotely without the necessity of approaching the mark.

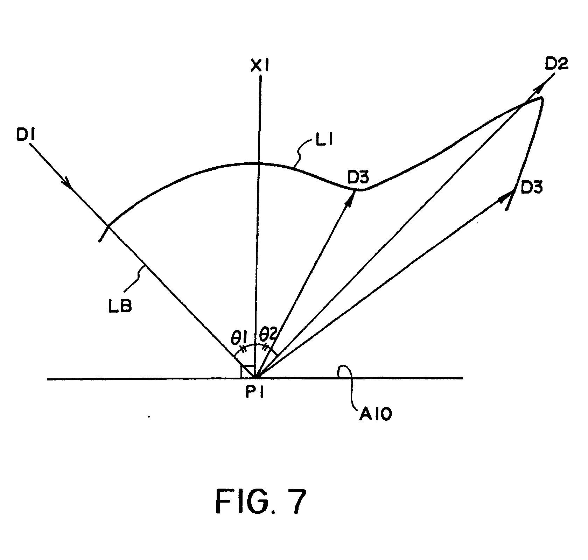

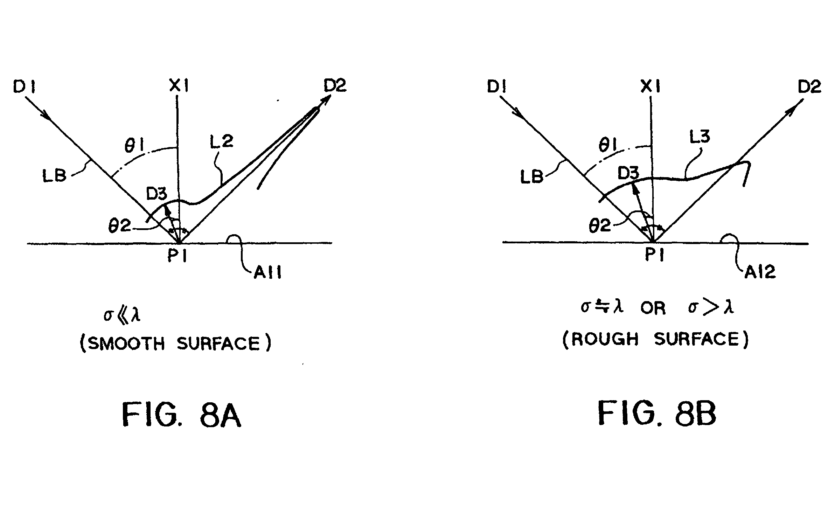

Herein, the principles of the mark reading system 30 will be described in conjunction with FIGS. 7 and 8. The principles are constructed on the basis of the correlation between the light diffusibility of a metallic surface and the surface roughness thereof.

FIG. 7 is a diagram for explaining the typical directional characteristic of luminance observed when rays are Irradiated obliquely to a certain surface A10 of a metal or the like. The directions of vectors in the drawing correspond to viewing directions, and the sizes of the vectors correspond to luminance levels.

In general, when a light beam LB having a thin bundle of rays emits obliquely onto a certain surface A10 at a given range of incidence angles θ1 formed between a predetermined emission direction D1 and a perpendicular axis X1 to the reading surface A10 at an incidence position P1 thereon, the light beam LB reflects from the surface A10 at the position P1 in a manner that the luminance L1 of an irradiated spot of the beam LB has a maximum level in a direction close to a full reflection (direction of mirror reflection) D2 defined with an reflection angle θ2 formed between the receiving direction and the perpendicular axis X1 to the reading surface A10 at the incidence position P1 thereon).

All the rays are not reflected in the direction of full reflection D2 but some of the rays are reflected in the other various diffusing directions being off from the direction D2. The latter reflection is referred to as directions of diffusion reflection D3. Reflected light resulting from directions D3 is referred to as diffusion reflection light. The weaker the direction-oriented tendency of the luminance L1 of the irradiated spot of the beam LB at the incidence position P1 on the surface A10 Is, the higher the light diffusibility of the surface A10 is. The light diffusibility usually depends on surface roughness or the like. It is known that a rougher surface enjoys higher light diffusibility. In the other word, the strength of the diffusion reflection light LB can serve as an Index of the roughness a of the surface.

FIG. 8A explains a situation in which the light beam LB is irradiated to a relatively smooth surface A11, which has a surface roughness level σ (determined with a mean of squared heights of concave and convex parts of the surface a) that is sufficiently lower than a level associated with the wavelength λ of the light beam, at an incidence angle θ1 of approximately 45°. In this case, the luminance L2 of the irradiated spot at the incidence position P1 on the surface A11 assumes exactly a maximum level in the direction of full reflection D2 in which the reflection angle θ2 is approximately 45° (=θ1), and exhibits Intense direction-oriented tendency. That Is to say, the surface A11 has poor light diffusibility.

FIG. 8B explains a situation in which the light beam LB is irradiated to a relatively rough surface A12, which has the surface roughness level σ that is equal to or higher than a level associated with the wavelength λ of the light beam (σ = λ or σ > λ), at the incidence angle θ1 of approximately 45°. In this case, the luminance L3 of an irradiated spot at the Incidence position P1 on the surface A12, unlike that In the foregoing case, assume a peak level In the direction of full reflection D2 but exhibits feeble direction-oriented tendency. The light diffusibility of the surface A12 is therefore better than the one in the foregoing case.

When an irradiated spot of the light beam LB at the incidence position P1 on the surface of the object OB is viewed from directions of diffusion reflection D3, the luminance L3 attained from the rough surface A12 shown In FIG. 8B becomes higher in average than the luminance L2 attained from the smooth surface A11 shown In FIG. 8A because of the effect of diffusion reflection. For instance, this effect becomes significant especially when the reflection angle θ2 ranges, as illustrated, from approximately 0° to 10°.

This embodiment is intended to read the mark such as characters, a graphic, a symbol, numerals, a bar code or the like placed on an object member having a reading surface, on which surface portions different In surface roughness are preformed as smooth and rough surface portions forming the mark on the basis of an optical fact concerning diffusion reflection occurring with irradiation of the light beam.

To be more specific, the mark reading system 30 shown In FIG. 6 comprises two light-irradiating units (light projectors) 31, 31 which constitute a irradiating means of the present invention, an optical system (collection optical system) 32, a two-dimensional light-receiving sensor 33 (the optical system 32 and light-receiving sensor 33 constitute a light-detecting means of the present invention), and a data processor 35, which forms an analyzing means of the present invention, to be connected to the light-receiving sensor 33 via a signal cable 34.

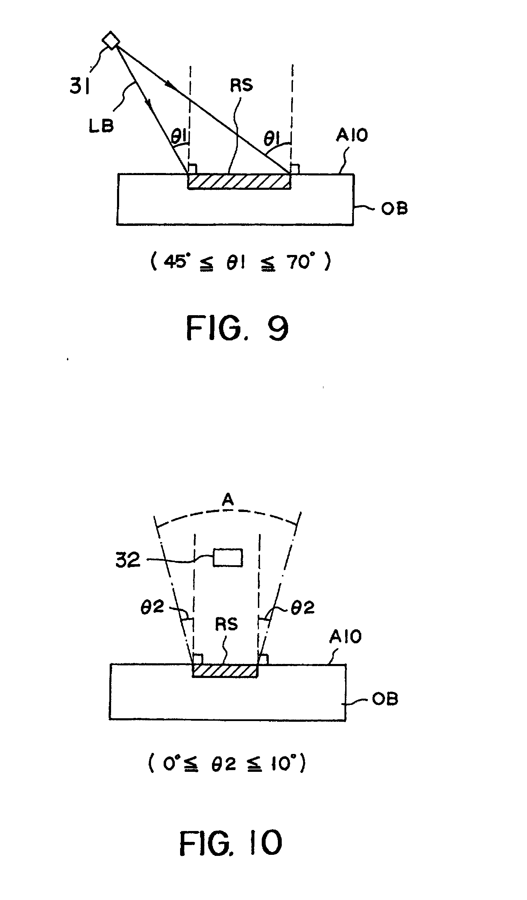

The light-irradiating units 31, 31 each include, for example, a light-emitting diode as a light source, and are each located at a position within a range In which the light beam LB can, as shown in FIG. 9, be irradiated to the reading surface RS of the object member OB at a desired Incidence angle θ1, preferably of 45° to 70°. Therefore, each of the units 31, 31 irradiates the light beam LB, LB with a wide angle between them at a time onto the reading surface RS of the object member OB according to a predetermined emission direction.

The optical system 32 is, as shown in FIG. 10, located at a position within an area in which diffusion-reflection light beam LB reflected from the reading surface RS of the object member OB at a desired reflection angle θ2, preferably of 0° to 10° is received, that is, a position within an area A shown in FIG.10 substantially opposed to the reading surface RS. Therefore, the optical system 32 collects each of the light beam LB, LB reflected from the reading surface RS of the object member according to a predetermined receiving reflection directions selected from the aforesaid diffusion reflection directions.

The optical system 32 includes a lens 40 for receiving and converging the light beam LB according to the selected receiving directions, a diaphragm 41 for optically narrowing down the converged beam, and a light-interceptive cover 42 for intercepting rays other than diffusion-reflection light beam LB incident on a photoelectric transform side (light reception side) 33a of the light-receiving sensor 33. The light-Interceptive cover 42 is made of a material that does not pass light having a wavelength detectable by the light-receiving sensor 33, and located at a position at which the surroundings of an optical path between the light receiving portion 33a of the sensor 33 and the diaphragm 41 can be shielded.

The optical system 32 converges diffusion-reflection light beam LB reflecting the state of the surface of the reading surface RS, which is pattered by differentiating the surface roughness of the object OB, so as to form an optical image on the light receiving portion 33a of the light-receiving sensor 33.

The light-receiving sensor 33 for detecting diffusion reflection light beam LB via the optical system 32 is formed with, for example, a two-dimensional CCD (charge-coupled device) image sensor in which numerous photoelectric transform elements are arranged on a planar basis. The sensor 33 transforms a light signal represented by diffusion-reflection light beam LB, which reflects a difference in surface roughness between the smooth and rough surface portions forming the mark and is received by the light reception portion 33a thereof, into an corresponding electrical signal to the light beam LB, and supplies the electrical signal to the data processor 35 via the signal cable 34.

The data processor 35 includes, for example, a microcomputer, and distinguishes a smooth and rough surface portions on the reading surface RS based on the supplied electrical signal. Specifically, when a detected amount of light beam LB Is large, a corresponding surface portion is judged to have the rough surface portion. When the detected amount of the light beam LB is small, the corresponding portion is judged to have a smooth surface portion. Thus, the data processor 35 executes a sequence of data analysis (for example, a graphic analysis algorithm for recognizing a two-dimensional pattern) for recognizing a one-dimensional, two-dimensional or the like mark pattern. Depending on the kind of the mark, an appropriate locally-procurable product may be adapted to the data processor 35.

Next, the operations of the whole of this embodiment will be described.

First, when the mark reading system 30 is activated, the light beams LB emanating from the two light-irradiating units 31 are irradiated to cover at a time the whole of the reading surface RS of the object member OB according to the emission direction.

The light beams LB are reflected from the reading surface RS in the full and diffusion-reflection directions. However, since the positional relationships among the reading surface RS of the object member OB, light-irradiating units 31, and optical system 32 are set In terms of the aforesaid Incidence and reflection angles θ1 and θ2, the light beam LB only In the diffusion-reflection directions falls on the optical system 32. In other words, the light beam LB falls on the lens 40 as the light signal represented by diffusion-reflection light beam LB Indicating different amounts of light between the smooth and rough surface portions of the reading surface RS. After converged by the lens 40, the light beam LB is narrowed down by the diaphragm 41 and reaches the light reception portion 33a of the light-receiving sensor 33. Light beam other than the diffused-reflection light beam LB cannot reach the light reception side 33a because of the presence of the light-interceptive cover 42.

The light signal having reached the light receiving portion 33a of the light-receiving sensor 33 Is transformed into an electrical signal carrying two-dimensional mark picture information and detected. The detected signal is supplied to the data processor 35 via the signal cable 35, and subjected to the sequence of data analysis for reading the mark on the basis of a difference in detected amount of light.

According to this embodiment, the mark placed directly on a metallic object member by differentiating surface roughness can be read readily and precisely even in, for example, a remote place. The efficiency of identifying an object member can be improved greatly.

In this embodiment, light beams having a wide angle between them are irradiated at a time at given incidence angles according to the aforesaid principles based on diffusion-reflection. This constitution obviates the necessity of a mechanism for scanning light one the reading surface and a mechanism for holding the positional relationship between the irradiated spot of the light beam and the light-receiving part of an optical system. There is therefore an advantage that a system configuration can be simplified.

The light source in each light-irradiating unit is not limited to the light-emitting diode but may be, if necessary, a lamp that is lit with a direct current. Moreover, when a CCD is used as the light-receiving sensor, a lamp that is lit with a high-frequency current during a period shorter than a detection time required by the CCD will also do.

When direct-current (DC) [amps are used as light-irradiating units, an amount of irradiated light per unit time is temporally stable. There is therefore substantially no fear of an amount of light dependent on detection timing or an insufficient amount of light. The precision in reading the mark can be improved. This is substantially true even when the other types of DC lamps are employed. By contrast, when alternating-current (AC) lamps are used, if a period (T) during which the lamps are lit with a current alternating at a high frequency is made equal to or shorter than a detection time (D) required by a CCD (T≤D), the dependency of a detected amount of light on detection timing can be alleviated and a phenomenon that a detected amount of light becomes insufficient can be nearly avoided. This is because when AC lamps are used, since an amount of irradiated light per unit time varies at intervals of a given period, an amount of reflected light varies at intervals of the same period. Consequently, a detected amount of light becomes dependent on detection timing and becomes insufficient.

In this embodiment, two light-irradiating units are used to irradiate light to the same area from different directions. A difference in incidence angle or illuminance of the light beam between mutually-separated positions within the reading surface can be further reduced. Consequently, the dependency of a detected amount of diffusion-reflection light on a position within the reading surface can be alleviated. This is because when only one light-irradiating unit is used, there arises a difference in incidence angle or illuminance of the light beam between mutually-separated positions within the reading surface. The difference becomes significant, especially, when the length of the reading surface cannot be regarded to be sufficiently smaller than the distance between the light-irradiating unit and the reading surface. Moreover, the dependency of diffusion-reflection light on a position within the reading surface is aggravated. Incidentally, the number of light-irradiating units is not limited to two. Even when the number of light-irradiating units is three or more, the same advantage as that mentioned above can still be exerted.

In this embodiment, since a CCD is used as a light-receiving sensor, there is an advantage that advanced data analysis can be executed relatively readily by a computer on the basis of a detected signal provided by the CCD. The CCD is characteristic of a high degree of integration and high resolution, and is therefore suitable for reading with high precision and reliability a mark on a member such as a component member of a reactor which is requested to be marked in as narrow an area as possible on the surface thereof in such a manner that high corrosion resistance will not be impaired. Moreover, the CCD is relatively inexpensive and easy to use.

In this embodiment, the reflection angle of the diffusion-reflection light beam is limited to, preferably, a range from 0° to 10°. At least a light-receiving part (condenser lens) of an optical system is therefore located at a position substantially opposite to the reading surface of the object member. The projection area of the reading surface viewed from the light-receiving part of the optical system is larger than that viewed when the light-receiving part is located In an oblique direction. In other words, an optical image formed on the light-receiving side of a CCD is larger. Higher-resolution image data can therefore be detected. Consequently, reading precision and reliability can be Improved effectively.

When the incidence angle of the light beam is confined to a range from 45° to 70°, the light beam in the full reflection direction will not be fetched but a difference in detected amount of light between a smooth and rough surface portions becomes more apparent. Since the light beam in diffusion-reflection directions direction in which an reflection angle ranges from 0° to 10° can be detected, there arises an advantage that reading precision can be further improved.

In this embodiment, a two-dimensional CCD is used as a light-receiving sensor. The light-receiving sensor is not limited to the two-dimensional CCD but may be any other two-dimensional imaging device. When a mark contains one-dimensional information alone like a bar code does, a one-dimensional imaging device such as a one-dimensional CCD may be used.

### FIFTH EMBODIMENT

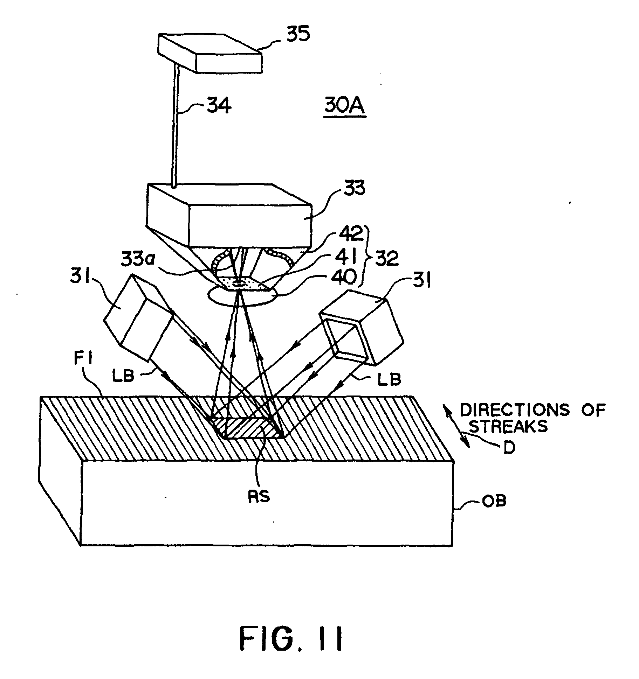

FIG. 11 is an overall configuration diagram of the fifth embodiment of the present invention. In this embodiment, a mark reading system of the present Invention is adapted for reading a mark on the surface of an object member on which has a mechanically-ground surface.

A mark reading system 30A shown in FIG. 11 is a system having the same system configuration as that mentioned previously and reading the mark placed on the mechanically-ground surface F1 of the object member OB. More particularly, the reading system 30A irradiates light beams LB emanating from two light-irradiating units 31, each of which Is formed with a light-emitting diode, in perpendicular directions to directions Dot streaks on the surface F1. A reflected light beam LB is detected by the light-receiving sensor 33 formed with a two-dimensional CCD, and transformed Into an electrical signal. The electrical signal is sent to the data processor 35 via the signal cable 34, and analyzed in order to read the mark.

Herein, in the perpendicular directions to the directions D of streaks on the surface F1, a mean of squared heights of concave and convex parts Is maximized and constant. Reflected light of the light beams LB irradiated from the light-irradiating units 31 in the directions can be received by the light-receiving sensor 33 via the optical system 32 as diffusion-reflection light which has the highest diffusibility, that is, of which luminance has the least direction-oriented tendency, which is smooth on the average, and which is large in amount of light.

Thus, according to this embodiment, the same advantage as the aforesaid one can be exerted more effectively even for the mark placed on the mechanically-ground surface.

### SIXTH EMBODIMENT

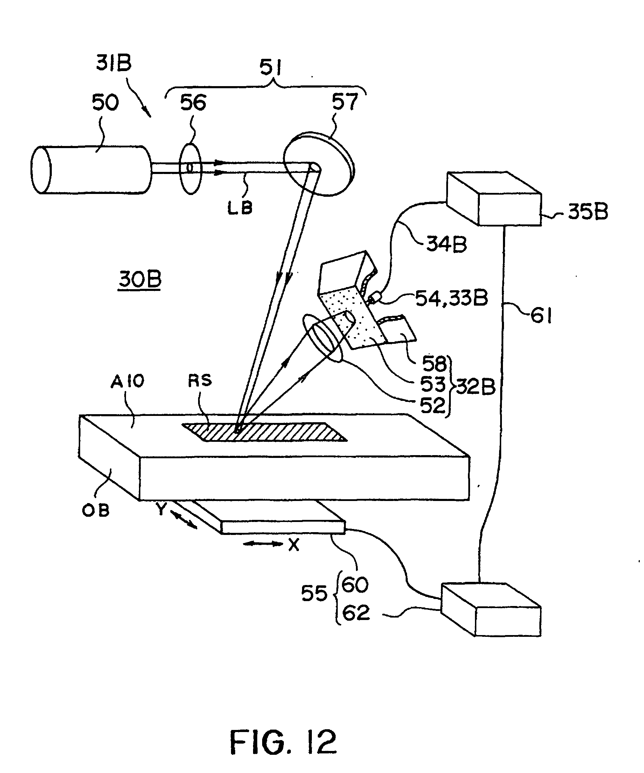

FIG. 12 is an overall configuration diagram of the sixth embodiment of the present invention.

A mark reading system 30B shown in FIG. 12 is a system in which a laser beam is used as a light beam, the aforesaid system configuration is partly modified, and an XY driver that is a scanning element of the present Invention for causing an irradiation spot of a laser beam to scan Is included. Specifically, the reading system 30B comprises a light-irradiating unit 31B including a continuous-wave (CW) laser 50 and irradiation optical system 51, a collection optical system 32B that is a combination of a condenser lens 52 and diaphragm 53, a light-receiving sensor 33B formed with a photoelectric transform device 54, a data processor 35B, which is substantially identical to the aforesaid one, connected to the sensor 33B over a signal cable 34B, and an XY driver 55 for causing an object member OB to freely move in X and Y directions.

The light-irradiating unit 31B includes the CW laser 50 serving as a light source, and the irradiation optical system 51 composed of a lens 56 and mirror 57. The laser 50 oscillates a CW laser beam LB. The laser beam LB is converged by the condenser lens 56 so that the laser beam becomes a spot beam providing an irradiated spot with a desired diameter, and then irradiated to the reading surface RS on the object member OB from a desired direction via the mirror 57.

The optical system 32B has a structure that at least the condenser lens 52 and diaphragm 53 are combined. Like in the aforesaid optical system, diffusion-reflection light reflected from the reading surface is received by the light reception side 54a of the photoelectric transform device 54 via the lens 52 and diaphragm 53. A light-interceptive cover 58 is located to shield the light reception side 54a of the photoelectric transform device 54, and made of a material not passing rays that have a wavelength detectable by the photoelectric transform device 54.

The optical arrangement of the optical system 32B and irradiation optical system 31B relative to the object member OB is predetermined so that reflected light can be received in diffusion-reflection directions, which is off the full reflection direction determined with the surface A10 of the object member OB and the incidence direction of a spot beam as described as part of the principles of the present invention, within a laser scanning range which will be described later. Specifically, when laser scanning is about to be started, the optical system 32B and irradiation optical system 31B are positioned at points at which the parameters such as an incidence angle θ1 of the laser beam LB with respect to the reading surface RS of the object member OB, an area of an irradiated spot in the reading surface RS, and an reflection angle θ 2 and an solid angle of the laser beam LB In diffusion reflection directions are set to fixed values.

The light-receiving sensor 33B includes the photoelectric transform device 64 Instead of the CCD, detects the laser beam LB represented by diffusion reflection light passing through the optical system 32B into an electrical signal corresponding a electrical signal to the laser beam LB, and then supplies the electrical signal to the data processor 35B via the signal cable 34B.

The XY driver 55 includes an XY driving stage 60 for freely moving the object member OB in X and Y directions, and a controller 62 that controls the drive in the X and Y directions of the stage 60 and is connected to the data processor 35B via a signal cable 61. The stage 60 on which the object member OB is placed is driven in the X and Y directions synchronously with a detecting operation performed by the photoelectric transform device 64 under the control of the controller 62. Thus, the laser beam LB emanating from the light-irradiating unit 31B is scanned so that the irradiated spot of the laser beam LB covers the reading surface RS of the object member OB. When the mark to be preformed is, for example, one-dimensional Information like a bar code is, the XY driver 55 may Include a one-dimensional X or Y driving stage.

Next, the operations of the whole of this embodiment will be described.

First, when the mark reading system 30B is activated, the laser beam LB emanating from the laser 50 is irradiated to the reading surface RS via the lens 56 and mirror 57 constituting the irradiation optical system 51. The laser beam LB is reflected from the reading surface RS. A laser beam LB reflected according to diffusion-reflection directions is transformed into an electrical signal by the photoelectric transform device 54 and detected. A resultant detected signal is sent to the data processor 35B via the signal cable 34B.

Synchronously with the foregoing operation of transmitting and receiving the laser beam LB, laser scanning is carried out in the X and Y directions with the drive of the XY driving unit 55 so that the irradiated spot of the laser beam LB on the object member OB placed on the stage 60 can cover the whole reading surface RS. During the laser scanning, a light signal represented by diffusion-reflection light and detected by the photoelectric transform device 64 is sent to the data processor 35B via the signal cable 34B. In the data processor 35B, the sequence of data analysis for reading the mark on the basis of a difference in amount of diffusion-reflection light is executed in the same manner as that mentioned above. Consequently, a smooth and rough surface portions is identified, thereby the mark is eventually read and recognized.

Herein, a detected amount of diffusion-reflection light is greatly dependent on the parameters whose values are determined by the aforesaid optical arrangement, that is, four physical quantities; an incidence angle θ1 of the laser beam LB, an area of an irradiated spot of the laser beam LB on the reading surface RS, and an reflection angle θ2 and a solid angle of the laser beam in diffusion-reflection directions. In this embodiment, the physical quantities are set to fixed values at the time of laser scanning. This means that a detected amount of diffusion-reflection light depends solely on surface roughness but is hardly affected by disturbance dependent on the values of the above four physical quantities.

According to this embodiment, there is provided an advantage that the mark placed by differentiating surface roughness can be read highly precisely and clearly. Even when the reading surface is a curved surface or extends In a wide range such as a surface of a tube or the like, the embodiment can apply readily. A system offering great design freedom can therefore be provided.

in this embodiment, since a photoelectric transform device is used as a light-receiving sensor, more advanced data analysis can be carried out by a computer in the same manner as that when a CCD is used. Moreover, a CW laser Is used for a light-irradiating unit. Since the CW laser output permits a temporally stable amount of irradiated light per unit time, the dependency of an amount of light detected by the photoelectric transform device on detection timing and the associated insufficiency in detected amount of light can substantially be resolved.

In this embodiment, an XY driver is used as a scanning element for a laser beam. Alternatively, for example, a mechanism for mechanically actuating an irradiation optical system may be used to cause an irradiated spot of a laser beam to freely scan over a marking area. This alternative still provides the same advantage as the aforesaid one.

### EXAMPLES

A typical laser marking system and mark reading system among those of the aforesaid embodiments were used to conduct various tests in an experiment. For this experiment, a BWR fuel clad made of zircalloy-2 and ground mechanically in a finishing process was used.

First, the laser marking system was used to conduct a marking test. In this test, a bar code used as the mark placed on an edge of an outer surface of a mechanically-ground sample. The laser marking conditions set for this test are as follows:
(1) a YAG laser (AO-Q switch) is used as a laser, the wavelength of pulsed laser light is set to 1.084 micrometers, the pulse-repetition frequency is set to 34 kHz, and the laser output is set to 18.5 W;
(2) a beam scanning system in which a galvanometer and F- θ lens (focal length; 354 mm) are used to constitute a laser scanning optical system is adopted, the diameter of a converged light spot on the surface of the sample Is set to a range from 0.1 to 0.15 mmφ, and the beam scanning speed is set to 30 mm/sec.; and
(3) an insert gas composed of argon 100 % is used for a gas feed system, and the gas flow rate is set to 5 liters/min.

The state of the surface of the sample bearing a bar code so obtained under the above set condition was Inspected.

Visual check of the surface of the sample revealed that the laser-Irradiated surface portion looked like a mirror and glossed like a metal, and discoloring was hardly recognized. Due to a difference in gloss between the laser-irradiated and the remaining non laser-irradiated surface portions, the pattern of the bar code placed on the surface of the sample by the laser beam was clearly recognized with the naked eyes.

The surface of the sample was checked using a scanning electron microscope (SEM) whose power was set to 500. Streaks resulting from mechanical grinding that was performed in a finishing process were recognized in the non laser-irradiated surface portion, while the streaks resulting from mechanical grinding on the laser-irradiated surface portion were almost completely deleted. It was recognized that the laser-irradiated surface portion was in a smooth state. Moreover, few microscopic cracks occurred.

Next, the state of the subsurface layer of the sample was Inspected. Check of the section of the sample using an optical microscope revealed that the thickness of a fused part of the subsurface layer to which light was irradiated by the laser was 1 micrometer or less, and the depth of a heat susceptible part thereof was about 25 micrometers.

Next, a corrosion resistance test (autoclaving test) was conducted under a condition that the sample was exposed to vapor of 400°C for 72 hours. The corrosion resistance of the sample was checked. It was recognized that a black oxide was produced in the laser-irradiated surface portion of the sample and there was almost no problem in terms of material strength.

Under an atmosphere containing oxygen and above-mentioned conditions (1) and (2), the marking test was carried out, and the same SEM check and corrosion resistance test was conducted. As a result, in the SEM check, microscopic cracks each having a width of about 10 micrometers were identified on the surface of the sample. In the corrosion resistance test, it was recognized that corrosion of the laser-irradiated surface portion made progress, a white oxide was produced, and the material strength deteriorated.

Next, the sample used in the marking test was used as an object, and the mark reading system was used to conduct a reading test. The conditions for mark reading set for this test were such that two red LEDs that emit continuous light were used as light-irradiating units, the irradiating directions were set to perpendicular directions to directions of the streaks on the mechanically-ground surface of the sample, and a CCD linear sensor was used as a light-receiving sensor.

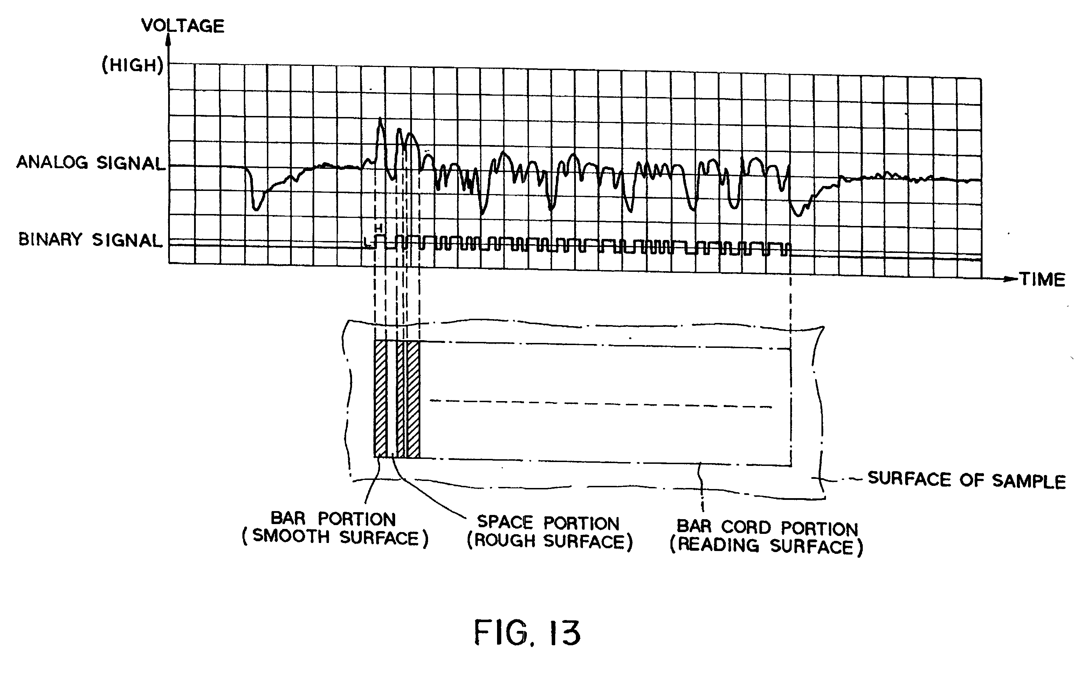

In practice, light beams were projected from the two red LEDs toward the reading surface of sample according to perpendicular directions to directions of the streaks resulting from mechanical grinding, reflected light in diffusion-reflection directions was detected by the CCD linear sensor, and then the detected signals were checked. The results are shown in FIG. 13.

FIG. 13 shows examples of typical detected signals among the results of a measurement performed using an oscilloscope, wherein the axis of abscissae indicates time and the axis of ordinates indicates voltage values. The upper part of each drawing shows an analog signal picked up by the CCD, and the lower part thereof shows a binary signal transformed from the analog signal. The larger an amount of light detected by the CCD is, the smaller the voltage value is.

As seen from the drawings, when a bar portion of the patterned bar code corresponding to laser-irradiated surface is scanned, the corresponding detected binary signal has a high (H) level shown in FIG. 13, that is, the detected amount of light is small. When a space portion of the patterned bar cord corresponding to the non laser-irradiated portion is scanned, the corresponding detected binary signal has a low (L) level shown in FIG. 13, that is, the detected amount of light Is large.

Thus, it was confirmed that the binary signal and the patterned bar code put on the sample had high correlation. Hence, by analyzing the CCD signal, the bar code that was provided by the above laser marking system could be read nearly precisely from the sample.

Needless to say, aforesaid conditions and apparatus configuration for the laser marking system and mark reading system are not of the nature limiting the scope of the present invention.

## Claims

1. A laser marking method for placing a mark on a metallic object member (OB) having a certain surface roughness by laser irradiation of the surface of the object member such that the mark becomes inherent to the object member, comprising the steps of:
presetting conditions including laser wavelength, laser output power, laser energy per unit area, scanning speed and, if applicable, repetition frequency associated with the laser irradiation based on the material of the object member (OB) and the mark to be provided;
emitting a laser beam (LB) and guiding the emitted laser beam onto the surface portion (A2) of the object member to be irradiated according to the preset conditions; and
scanning a spot irradiated by the guided laser beam on the surface portion (A2) of the object member (OB) to be irradiated according to the preset conditions,
thereby providing said mark in the laser-scanned surface portion,
**characterized in that**
the preset conditions are set such that
a melted surface layer (L1) with a targeted melting thickness is formed in the laser-scanned surface portion (A2) of the object member (OB) while suppressing abrasion which is re-coagulated afterwards to form the mark by the surface of the re-coagulated layer identifiable by differences in the surface roughness produced between the laser-scanned surface portion (A2) and the remaining non-laser scanned surface portion (A1) of the object member (OB).

2. A laser marking method according to claim 1, wherein
said non laser-scanned surface portion (A1) has a higher surface roughness than the laser-scanned surface portion (A2).

3. A laser marking method according to claim 2, wherein
a surface portion of said object member (OB) to be provided with said mark is mechanically-ground before the laser irradiation.

4. A laser marking method according to any one of claims 1 to 3, further comprising a step of:
feeding an inert gas composed of at least one of He, Ne, Ar, Kr, Xe, and Rn gases onto said laser-scanned surface portion during the scanning step.

5. A laser marking method according to one of claims 1 to 4, wherein the preset conditions are set such that the targeted melting thickness is 1 µm or less.

6. A laser marking method according to one of claims 1 to 5, wherein the preset conditions are set such that a targeted depth of metallurgically microscopic tissue, produced due to the heat susceptibility of the metallic object member (OB), of 30 µm or less is achieved.

7. A laser marking method according to any one of claims 1 to 6, further comprising a step of:
reading said mark formed by the surface of the re-coagulated layer identifiable by differences in the surface roughness produced between the laser-scanned surface portion (A2) and the remaining non-laser scanned surface portion (A1) of the object member (OB),
wherein the reading step comprises the steps of:
emitting a light beam onto the surface of the object member (OB) according to a predetermined range of emission directions of the light beam;
receiving said light beam reflected from the surface of the object member (OB) according to a predetermined range of receiving directions selected from diffusion reflection directions of the emitted light beam reflected at the surface on the basis of differences in light amount in the diffusion reflection directions between the laser-scanned surface portion (A2) and the remaining non-laser scanned surface portion (A1) covered by the emitted light beam;
detecting the light beam received as a corresponding electrical signal to the light beam; and
reading said mark by identifying the laser-scanned surface portion (A2) and the remaining non-laser scanned surface portion (A1) based on the electrical signal.

8. A laser marking method according to claim 7, wherein a surface portion of said object member (OB) has mechanically-ground streaks formed thereon, the emission directions being perpendicular to directions of the streaks.

9. A laser marking method according to claim 7 or 8,
wherein said emission directions range from 45° to 70° of incidence angles formed between the emission directions and a perpendicular axis to the reading surface at an incidence position thereon, the receiving directions range from 0° to 10° of reflection angles formed between the receiving directions and the perpendicular axis at the incidence position thereon.

10. A laser marking system for performing a laser marking method of one of claims 1 to 9, comprising:
means (14) for presetting conditions including laser wavelength, laser output power, laser energy per unit area, scanning speed and, if applicable, repetition frequency associated with the laser irradiation based on the material of the object member (OB) and the mark to be provided,
means (11) for emitting the laser beam (LB) according to the preset conditions, and
means (13) for guiding the laser beam emitted by the oscillating means onto the surface portion (A2) of the object member (OB) to be irradiated and for scanning an irradiated spot of the laser beam guided on the surface portion (A2) of the object member (OB) to be irradiated according to the conditions such that said mark is provided in the laser-scanned surface portion (A2),
**characterized in that**
the presetting means (14) is adapted for presetting the preset conditions such that a melted surface layer (L1) with a targeted melting thickness is formed in the laser-scanned surface portion (A2) of the object member (OB) while suppressing abrasion which is re-coagulated afterwards to form the mark by the surface of the re-coagulated layer identifiable by differences in the surface roughness produced between the laser-scanned surface portion (A2) and the remaining non-laser scanned surface portion (A1) of the object member (OB).

11. A laser marking system according to claim 10, further comprising
a gas feeder (20) for feeding an inert gas composed of at least one of He, Ne, Ar, Kr, Xe, and Rn gases onto the laser-scanned surface portion during the scanning of the laser beam.

12. A laser marking system according to claim 10 or 11, wherein said emitting means is a device providing a pulse laser beam as the laser beam.

13. A laser marking system according to any one of claims 10 to 12, further comprising:
means (30) for reading said mark formed by the surface of the re-coagulated layer identifiable by differences in the surface roughness produced between the laser-scanned surface portion (A2) and the remaining non-laser scanned surface portion (A1) of the object member (OB),
wherein said reading means comprises:
means (31) for emitting a light beam onto the surface of the object member (OB) according to a predetermined range of emission directions of the light beam;
means (32) for receiving said light beam reflected from the surface of the object member (OB) according to a predetermined range of receiving directions selected from the diffusion reflection directions of the emitted light beam reflected at the surface on the basis of differences in light amount in the diffusion reflection directions between the laser-scanned surface portion (A2) and the remaining non-laser scanned surface portion (A1) covered by the emitted light beam;
means (33) for detecting the light beam received as a corresponding electrical signal to the light beam; and
means (35) for reading said mark by identifying the laser-scanned surface portion (A2) and the remaining non-laser scanned surface portion (A1) based on the electrical signal.

14. A laser marking system according to any one of claims 10 to 13, wherein said emitting means (31) includes a light source of irradiating the light beam onto a wide-angle area covering the surface of said object member (OB).

15. A laser marking system according to claim 14, wherein said light source is a plurality of light sources.

16. A laser marking system according to any one of the claims 10 to 13, wherein said emitting means (31) includes a laser device (50) for emitting a laser beam as the light beam, means (51) for guiding the laser beam received from the laser device onto the surface of the object member (OB) according to the emission directions, and means (55) for scanning an irradiated spot of said laser beam guided by the guiding means on the surface of the object member (OB).

## Patentansprüche

1. Lasermarkierungsverfahren zum Plazieren einer Markierung auf einem metallischen Objektteil (OB), dass eine gewisse Oberflächenrauheit aufweist, durch Laserbestrahlung der Oberfläche des Objektteils derart, dass die Markierung dem Objektteil inhärent wird, das die Schritte aufweist:
Voreinstellen von Bedingungen, die die Laserwellenlänge, die Laserausgangsleistung, die Laserenergie pro Einheitsfläche, die Abfahrgeschwindigkeit und, falls anwendbar, die Wiederholfrequenz enthalten, die mit der Laserstrahlung verbunden sind, basierend auf dem Material des Objektteils (OB) und der vorzusehenden Markierung;
Emmitieren eines Laserstrahls (LB) und Führen des emmitierten Laserstrahls auf den Oberflächenabschnitt (A2) des Objektteils, der zu bestrahlen ist, entsprechend der voreingestellten Bedingungen; und
abfahrendes Bewegen eines Lichtfleckes, der durch den geführten Laserstrahl bestrahlt wird, auf dem Oberflächenabschnitt (A2) des Objektteils (OB), der zu bestrahlen ist, entsprechend der voreingestellten Bedingungen,
wodurch die Markierung in dem mit dem Laser abgefahrenen Oberflächenabschnitt vorgesehen wird,
**dadurch gekennzeichnet, dass**
die voreingestellten Bedingungen derart eingestellt sind, dass
eine geschmolzene Oberflächenschicht (L1) mit einer Zielschmelzdicke in dem mit dem Laser abgefahrenen Oberflächenabschnitt (A2) des Objektteils (OB) ausgebildet wird, während Abrasion unterdrückt wird, die danach re-koaguliert wird, zur Ausbildung der Markierung durch die Oberfläche der re-koagulierten Schicht, die identifizierbar ist durch Unterschiede in der Oberflächenrauheit, die zwischen dem mit dem Laser abgefahrenen Oberflächenabschnitt (A2) und dem verbleibenden, nicht mit dem Laser abgefahrenen Oberflächenabschnitt (A1) des Objektteils (OB) erzeugt werden.

2. Lasermarkierungsverfahren nach Anspruch 1, bei dem
der nicht mit dem Laser abgefahrene Oberflächenabschnitt (A1) eine höhere Oberflächenrauheit als der mit dem Laser abgefahrenen Oberflächenabschnitt (A2) aufweist.

3. Lasermarkierungsverfahren nach Anspruch 2, bei dem
ein Oberflächenabschnitt des Objektteils (OB), der mit der Markierung zu versehen ist, vor der Laserbestrahlung mechanisch geschliffen wird.

4. Lasermarkierungsverfahren nach einem der Ansprüche 1 bis 3, das weiter den Schritt aufweist:
Zuführen eines Inertgases, dass mindestens aus einem der Gase, He-, Ne-, Ar-, Kr-, Xeund Rn-Gase, zusammengesetzt ist, auf dem mit dem Laser abgefahrenen Oberflächenabschnitt während des Abfahrschrittes.

5. Lasermarkierungsverfahren nach einem der Ansprüche 1 bis 4, bei dem
die voreingestellten Bedingungen derart eingestellt sind, dass die Zielschmelzdicke ein 1 µm oder weniger ist.

6. Lasermarkierungsverfahren nach einem der Ansprüche 1 bis 5, bei dem
die voreingestellten Bedingungen derart eingestellt sind, dass eine Zieltiefe von metallurgischem mikroskopischem Gewebe, dass aufgrund der Wärmeempfindlichkeit des metallischen Objektteils (OB) erzeugt wird, von 30 µm oder weniger erzielt wird.

7. Lasermarkierungsverfahren nach einem der Ansprüche 1 bis 6, das weiter den Schritt des
Lesens der Markierung, die durch die Oberfläche der re-koagulierten Schicht gebildet wird, die identifizierbar ist durch Unterschiede in der Oberflächenrauheit, die erzeugt sind zwischen dem mit dem Laser abgefahrenen Oberflächenabschnitt (A2) und dem verbleibenden, nicht mit dem Laser abgefahrenen Oberflächenabschnitt (A1) des Objektteils (OB), aufweist,
bei dem der Leseschritt die Schritte des
Emmitierens eines Lichtstrahls auf die Oberfläche eines Objektteils (OB) entsprechend eines vorbestimmten Bereichs von Emissionsrichtungen des Lichtstrahls,
Empfangens des Lichtstrahls, der von der Oberfläche des Objektteils (OB) reflektiert wird, entsprechend eines vorbestimmten Bereichs von Empfangsrichtungen, die ausgewählt werden aus Diffusionsreflexionsrichtungen des emmitierten Lichtstrahls, der an der Oberfläche reflektiert wird, auf der Basis von Unterschieden in der Lichtmenge in den Diffusionsreflexionsrichtungen zwischen dem mit dem Laser abgefahrenen Oberflächenabschnitt (A2) und dem verbleibenden, nicht mit dem Laser abgefahrenen Oberflächenabschnitt (A1), die durch den emmitierten Lichtstrahl abgedeckt werden,
Detektierens des Lichtstrahls, der empfangen wird, als ein dem Lichtstrahl entsprechendes elektrisches Signal,
Lesens der Markierung durch Identifizieren des mit dem Laser abgefahrenen Oberflächenabschnitts (A2) und des verbleibenden, nicht mit dem Laser abgefahrenen Oberflächenabschnitt (A1) basierend auf dem elektrischen Signal,
aufweist.

8. Lasermarkierungsverfahren nach Anspruch 7, bei dem ein Oberflächenabschnitt des Objektteils (OB) mechanisch geschliffenen Streifen, die darauf ausgebildet sind, aufweist, wobei die Emissionsrichtungen senkrecht zu den Richtungen der Streifen sind.

9. Lasermarkierungsverfahren nach Anspruch 7 oder 8, bei dem
die Emissionsrichtungen im Bereich von 45° bis 70° der Einfallswinkel, die zwischen den Emissionsrichtungen und einer zu der Leseoberfläche an einer Einfallsposition auf dieser senkrechten Achse gebildet werden, liegen, und die Empfangsrichtungen im Bereich von 0° bis 10° der Reflexionswinkel, die zwischen den Empfangsrichtungen und der an der Einfallsposition senkrechten Achse auf dieser gebildet werden, liegen.

10. Lasermarkierungssystem zum Ausführen eines Lasermarkierungsverfahrens nach einem der Ansprüche 1 bis 9, das aufweist:
ein Mittel (14) zum Voreinstellen von Bedingungen, die die Laserwellenlänge, die Laserausgangsleistung, die Energie pro Einheitsfläche, die Abfahrgeschwindigkeit, und, falls anwendbar, die Wiederholfrequenz enthalten, die mit der Laserbestrahlung verbunden sind, basierend auf dem Material des Objektteils (OB) und der vorzusehenden Markierung,
ein Mittel (11) zum Emittieren des Laserstrahls (LB) entsprechend der voreingestellten Bedingungen, und
ein Mittel zum Führen des Laserstrahls, der durch das Oszillationsmittel emittiert wird, auf den Oberflächenabschnitt (A2) des Objektteils (OB), der zu bestrahlen ist, und zum abfahrenden Bewegen eines durch den Laserstrahl, der auf den Oberflächenabschnitt (A2) des Objektteils (OB) geführt ist, der entsprechend der voreingestellten Bedingungen zu bestrahlen ist, bestrahlten Flecks derart, dass die Markierung in dem mit dem Laser abgefahrenen Oberflächenabschnitt (A2) vorgesehen wird, **dadurch gekennzeichnet, dass**
das Voreinstellungsmittel (14) angepasst ist zum Voreinstellen der voreingestellten Bedingungen derart, dass eine geschmolzene Oberflächenschicht (L1) mit einer Zielschmelzdicke in dem mit dem Laser abgefahrenen Oberflächenabschnitt (A2) des Objektteils (OB) ausgebildet wird, während Abrasion unterdrückt wird, die danach re-koaguliert wird zur Ausbildung der Markierung durch die Oberfläche der re-koagulierten Schicht, die durch Unterschiede in der Oberflächenrauheit identifizierbar ist, die erzeugt werden zwischen den mit dem Laser abgefahrenen Oberflächenabschnitt (A2) und dem verbleibenden, nicht mit dem Laser abgefahrenen Oberflächenabschnitt (A1) des Objektteils (OB).

11. Lasermarkierungssystem nach Anspruch 10, dass weiter
einen Gaszuführer (20) zum Zuführen eines Inertgases aufweist, dass zusammengesetzt ist aus mindestens einem Gas aus He-, Ne-, Ar-, Kr-, Xe- und Rn-Gasen, auf den mit dem Laser abgefahrenen Oberflächenabschnitt während des abfahrenden Bewegens des Laserstrahls.

12. Lasermarkierungssystem nach Anspruch 10 oder 11, bei dem das Emissionsmittel eine Vorrichtung ist, die einen Pulslaserstrahl als den Laserstrahl liefert.

13. Lasermarkierungssystem nach einem der Ansprüche 10 bis 12, das weiter aufweist:
ein Mittel (30) zum Lesen der Markierung, die durch die Oberfläche der re-koagulierten Schicht gebildet wird, die identifizierbar ist durch Unterschiede in der Oberflächenrauheit, die erzeugt sind zwischen den mit dem Laser abgefahrenen Oberflächenabschnitt (A2) und
dem verbleibenden, nicht mit dem Laser abgefahrenen Abschnitt (A1) des Objektteils (OB), wobei das Lesemittel aufweist:
ein Mittel (31) zum Emittieren eines Lichtstrahls auf die Oberfläche des Objektteils (OB) entsprechend eines vorbestimmten Bereichs von Emissionsrichtungen des Lichtstrahls;
ein Mittel (32) zum Empfangen des Lichtstrahls, der von der Oberfläche des Objektteils (OB) reflektiert wird, entsprechend eines vorbestimmten Bereichs von Empfangsrichtungen, die ausgewählt sind aus den Diffusionsreflexionsrichtungen des emittierten Lichtstrahls, der an der Oberfläche reflektiert wird, auf der Basis von Unterschieden in der Lichtmenge in den Diffusionsreflexionsrichtungen zwischen den mit dem Laser abgefahrenen Oberflächenabschnitt (A2) und dem verbleibenden, nicht mit dem Laser abgefahrenen Oberflächenabschnitt (A1), die durch den emittierten Lichtstrahl abgedeckt sind;
ein Mittel (33) zum Detektieren des empfangenen Lichtstrahls als ein dem Lichtstrahl entsprechendes elektrisches Signal; und
ein Mittel (35) zum Lesen der Markierung durch Identifizieren des mit dem Laser abgefahrenen Oberflächenabschnittes (A2) und des verbleibenden, nicht mit dem Laser abgefahrenen Oberflächenabschnittes (A1) basierend auf dem elektrischen Signal.

14. Lasermarkierungssystem nach einem der Ansprüche 10 bis 13, bei dem das Emissionsmittel (31) eine Lichtquelle zum Strahlen des Lichtstrahls auf einen weitwinkligen Bereich, der die Oberfläche des Objektteils (OB) abdeckt, aufweist.

15. Lasermarkierungssystem nach Anspruch 14, bei dem die Lichtquelle eine Mehrzahl von Lichtquellen ist.

16. Lasermarkierungssystem nach einem der Ansprüche 10 bis 13, bei dem das Emissionsmittel (31) eine Laservorrichtung (50) zum Emittieren eines Laserstrahls als den Lichtstrahl, ein Mittel (51) zum Führen des Laserstrahls, der von der Laservorrichtung empfangen wird, auf die Oberfläche des Objektteils (OB) entsprechend der Emissionsrichtungen, und ein Mittel (55) zum abfahrenden Bewegen eines bestrahlten Punktes des Laserstrahls, der durch das Führungsmittel geführt wird, auf der Oberfläche des Objektteils (OB) aufweist.

## Revendications

1. Procédé de marquage au laser destiné à la disposition d'une marque sur un objet métallique (OB) ayant une certaine rugosité de surface, par irradiation par un laser de la surface de l'objet afin que la marque soit intégrée à l'objet, comprenant les étapes suivantes :
le préréglage de conditions comprenant la longueur d'onde du laser, la puissance de sortie du laser, l'énergie par unité de surface du laser, la vitesse de balayage et, le cas échéant, la fréquence de répétition associée à l'irradiation laser d'après le matériau de l'objet (OB) et la marque à former,
l'émission d'un faisceau laser (LB) et le guidage du faisceau laser émis vers la partie de surface (A2) de l'objet à irradier dans les conditions préréglées, et
le balayage d'une tache d'irradiation par le faisceau laser guidée sur la partie de surface (A2) de l'objet (OB) à irradier avec les conditions préréglées,
avec formation de cette manière de la marque sur une partie de surface balayée par le laser,
**caractérisé en ce que**
les conditions préréglées sont telles que
une couche fondue de surface (L1) ayant une épaisseur cible de fusion est formée dans la partie de surface balayée par le laser (A2) de l'objet (OB) avec suppression de l'abrasion, qui subit une nouvelle coagulation postérieure pour la formation de la marque constituée par la surface de la couche coagulée à nouveau, afin qu'elle puisse être identifiée par les différences de rugosité de surface produites entre la partie de surface balayée par le laser (A2) et la partie de surface restante non balayée par le laser (A1) de l'objet (OB).

2. Procédé de marquage au laser selon la revendication 1, dans lequel
la partie de surface non balayée par le laser (A1) a une rugosité de surface supérieurs à celle de la partie de surface balayée par le laser (A2).

3. Procédé de marquage au laser selon la revendication 2, dans lequel
une partie de surface de l'objet (OB) destinée à recevoir la marque subit un meulage mécanique avant irradiation par le laser.

4. Procédé de marquage au laser selon l'une quelconque des revendications 1 à 3, comprenant en outre l'étape suivante :
la transmission d'un gaz inerte composé d'au moins un gaz parmi He, Ne, Ar, Kr, Xe, Rn sur la partie de surface balayée par le laser pendant l'étape de balayage.

5. Procédé de marquage au laser selon l'une des revendications 1 à 4, dans lequel les conditions préréglées sont telles que l'épaisseur cible de fusion est inférieure ou égale à 1 µm.

6. Procédé de marquage au laser selon l'une des revendications 1 à 5, dans lequel les conditions préréglées sont telles qu'une profondeur cible d'un tissu métallurgiquement microscopique, produit par la sensibilité à la chaleur de l'objet métallique (OB), de 30 µm ou moins est obtenue.

7. Procédé de marquage au laser selon l'une quelconque des revendications 1 à 6, comprenant en outre une étape de :
lecture de la marque formée à la surface de la couche coagulée à nouveau et qui peut être identifiée par les différences de rugosité de surface produites entre la partie de surface balayée par le laser (A2) et la partie restante de surface non balayée par le laser (A1) de l'objet (OB),
dans lequel l'étape de lecture comprend les étapes suivantes :
l'émission d'un faisceau lumineux à la surface de l'objet (OB) dans une plage prédéterminée de directions d'émission du faisceau lumineux,
la réception du faisceau lumineux réfléchi par la surface de l'objet (OB) dans une plage prédéterminés de directions de réception sélectionnée parmi les directions de réflexion par diffusion du faisceau lumineux émis réfléchi à la surface d'après les différences de quantité de lumière dans les directions de réflexion par diffusion entre la partie de surface balayée par le laser (A2) et la partie restante de surface non balayée par le laser (A1) couverte par le faisceau émis,
la détection du faisceau lumineux reçu sous forme d'un signal électrique correspondant au faisceau lumineux, et
la lecture de la marque par identification de la partie de surface balayée par le laser (A2) et de la partie restante de surface non balayée au laser (A1) en fonction du signal électrique.

8. Procédé de marquage au laser selon la revendication 7, dans lequel une partie de surface de l'objet (OB) a des rayures formées par meulage mécanique, les directions d'émission étant perpendiculaires aux directions des rayures.

9. Procédé de marquage au laser selon la revendication 7 ou 8,
dans lequel les directions d'émission sont comprises entre 45 et 70 ° pour les angles d'incidence formés entre les directions d'émission et une perpendiculaire à la surface de lecture à une position d'incidence sur celle-ci, les directions de réception étant comprises entre 1 et 10 ° par rapport aux angles de réflexion formés entre les directions de réception et l'axe perpendiculaire à la position d'incidence de la lumière.

10. Système de marquage au laser destiné à la mise en oeuvre d'un procédé de marquage au laser selon l'une des revendications 1 à 9, comprenant :
un dispositif (14) de préréglage de conditions comprenant la longueur d'onde du laser, la puissance de sortie du laser, l'énergie par unité de surface du laser, la vitesse de balayage et, le cas échéant, la fréquence de répétition associée à l'irradiation au laser, d'après le matériau de l'objet (OB) et la marque à former,
un dispositif (11) d'émission du faisceau laser (LB) en fonction des conditions préréglées, et
un dispositif (13) de guidage du faisceau laser émis par le dispositif d'oscillation sur la partie de surface (A2) de l'objet (OB) à irradier et de balayage d'une tache d'irradiation du faisceau laser guidé sur la partie de surface (A2) de l'objet (OB) à irradier d'après les conditions afin qu'une marque soit formée dans la partie de surface balayée par le laser (A2),
**caractérisé en ce que**
le dispositif de préréglage (14) est destiné à prérégler les conditions préréglées de manière qu'une couche de surface fondue (L1) ayant une épaisseur de fusion cible soit formée dans la partie de surface balayée par le laser (A2) de l'objet (OB) avec suppression de l'abrasion qui présente une coagulation postérieure à nouveau pour la formation de la marque à la surface de la couche coagulée à nouveau qui peut être identifiée par les différences de rugosités de surface produites entre la partie de surface balayée par le laser (A2) et la partie restante de surface non balayée par le laser (A1) de l'objet (OB).

11. Système de marquage au laser selon la revendication 10, comprenant en outre
un organe (20) d'alimentation en gaz destiné à transmettre un gaz inerte composé d'au moins un gaz parmi He, Ne, Ar, Kr, Xe, Rn sur la partie de surface balayée par le laser pendant le balayage du faisceau laser.

12. Système de marquage au laser selon la revendication 10 ou 11, dans lequel le dispositif de l'émission est un dispositif formant un faisceau laser pulsé comme faisceau laser.

13. Système de marquage au laser selon l'une quelconque des revendications 10 à 12, comprenant en outre :
un dispositif (30) de lecture de la marque formée à la surface de la couche coagulée à nouveau et qui peut être identifiée par les différences de rugosité de surface produites entre la partie de surface balayée par le laser (A2) et la partie restante de surface non balayée par le laser (A1) de l'objet (OB),
dans le dispositif de lecture comprend :
un dispositif (31) d'émission d'un faisceau lumineux à la surface de l'objet (OB) dans une plage prédéterminée de directions d'émission du faisceau lumineux,
un dispositif (32) de réception du faisceau lumineux réfléchi par la surface de l'objet (OB) dans une plage prédéterminée de directions de réception sélectionnée parmi les directions de réflexion par diffusion du faisceau lumineux émis réfléchi à la surface d'après les différences de quantité de lumière dans les directions de réflexion par diffusion entre la partie de surface balayée par le laser (A2) et la partie restante de surface non balayée par le laser (A1) couverte par le faisceau émis,
un dispositif (33) de détection du faisceau lumineux reçu sous forme d'un signal électrique correspondant au faisceau lumineux, et
un dispositif (35) de lecture de la marque par identification de la partie de surface balayée par le laser (A2) et de la partie restante de surface non balayée au laser (A1) en fonction du signal électrique.

14. Système de marquage au laser selon l'une quelconque des revendications 10 à 13, dans lequel le dispositif d'émission (31) comprend une source de lumière destinée à projeter le faisceau lumineux sur une grande région angulaire recouvrant la surface de l'objet (OB).

15. Système de marquage au laser selon la revendication 14, dans lequel la source lumineuse est formée de plusieurs sources de lumière.

16. Système de marquage au laser selon l'une quelconque des revendications 10 à 13, dans lequel le dispositif d'émission (31) comporte un dispositif à laser (50) destiné à émettre un faisceau laser comme faisceau lumineux, un dispositif (51) de guidage du faisceau laser reçu du dispositif laser à la surface de l'objet (OB) d'après les émissions directes, et un dispositif (55) de balayage d'une tache d'irradiation du faisceau laser guidé par le dispositif de guidage à la surface de l'objet (OB).
